# EUROPÄISCHE PATENTANMELDUNG

(11) **EP 4 325 614 A1**
(43) Veröffentlichungstag der Anmeldung: **21.02.2024**
(21) Anmeldenummer: 23185715.2
(22) Anmeldetag: 17.07.2023
(51) Int. Cl.: H01M 10/052, H01M 10/054

(54) **VERFAHREN ZUR AUFBEREITUNG VON AKKUMULATOREN**

(30) Priorität: 20.08.2022 DE 102022121095
(71) Anmelder: Circu Li-ion S.A., 7471 Saeul (LU)
(72) Erfinder: Kohll, Alexander Xavier Christoff, 7471 Saeul (LU); Mathivanan, Karthik, 4210 Luxembourg (LU); Schaaf, Harry I., 77836 Rheinmünster (DE)
(74) Vertreter: Avon, Philipp Marcel

(57) **Zusammenfassung**

Die Erfindung betrifft ein Verfahren zur Aufbereitung von Akkumulatoren.

Aufgabe der hier beschriebenen Erfindung ist es, ein Verfahren zur Aufbereitung von Akkumulatoren bereitzustellen, mit dem eine schnelle, ressourcenschonende, kostengünstige und nachhaltige Wiederaufbereitung eines Akkumulators ermöglicht wird.

Dies gelingt dem erfindungsgemäßen Verfahren dadurch, dass der Akkumulator entladen wird, der entladene Akkumulator geöffnet wird, der geöffnete Akkumulator in seine Einzelzellen zerlegt wird und die Einzelzellen auf deren Zustand hin geprüft werden.

## Beschreibung

Die Erfindung betrifft ein Verfahren zur Aufbereitung von Akkumulatoren.

Aus dem Stand der Technik ist beispielsweise die metallurgische Aufbereitung von Batterien, insbesondere Lithium-Ionen- und Lithium-Polymer-Akkumulatoren vorbekannt, um die in einer Batteriezelle enthaltenen Wertstoffe, beispielsweise Kobalt, Nickel und Kupfer, zurückzugewinnen. Durch das bisher eingeschränkte Recycling dieser Akkumulatoren gehen viele wertvolle Ressourcen verloren.

Insbesondere im Hinblick auf die angestrebte Energiewende durch die Verwendung von Elektrofahrzeugen, für welche der Einsatz von Akkumulatoren vorgesehen ist, ist hinsichtlich des aktuellen Standes der Technik, zumindest fragwürdig, da bis dato wirtschaftlich vertretbare Recyclingverfahren nicht bekannt sind.

So ist beispielsweise immer noch unklar, wie die EU-Batterierichtlinie 2006/66/EG umgesetzt werden soll. Etwa im Zusammenhang mit dem Einsatz von Lithium-Ionen-Akkumulatoren wird insoweit eine Recyclingquote von mindestens 50 % gefordert.

Einige Verfahren zum Recycling von Akkumulatoren setzen auf pyro- und/oder hydrometallurgische Verfahren. Im Rahmen dieser Verfahren können nur ausgewählte Wertstoffe, beispielsweise Kobalt oder Nickel, zurückgewonnen werden. Andere Bestandteile der Akkumulatoren, wie etwa Aluminium, Lithium, Separatorfolien, Graphit und vorhandene Kunststoffe, werden meist einfach verbrannt.

Aus Sicherheitsgründen sind vor dem eigentlichen mechanischen Recycling umfangreiche vorbereitende Schritte erforderlich. So kann ein üblicher Akkumulator, der aus 100 Einzelzellen und mehr bestehen kann, bis auf die einzelne Zell- oder Modulebene demontiert werden. Die zumeist händische Demontage ist je nach Art der Zusammensetzung des Akkumulators sowie der Art der Verbindung zeitaufwendig. Gemäß entsprechender Veröffentlichung ist ein Mitarbeiter je nach Zelltyp zwischen 55 und 95 Minuten beschäftigt, um die entsprechenden Batterien zu zerlegen.

Insoweit wurde zumindest versucht, diese Prozesse zu automatisieren. Hier sind die Erfolge, der Umsetzung automatisierter Prozesse insoweit noch sehr am Anfang. Inzwischen wird darüber nachgedacht, die Automatisierung dadurch zu erleichtern, das Standards hinsichtlich des Designs von recyclingfreundlichen Akkumulatoren, durch entsprechende Vereinbarungen der beteiligten Hersteller realisiert werden.

Gemäß dem aktuellen Stand der Technik, werden sogenannte Akkumulatoren-Pakete, bestehend aus einer Vielzahl, in Reihe und/oder in Serie geschalteter Zellen aufwändig in ihre Einzelteile zerlegt, um aus diesen die wieder verwertbaren Zellen zu gewinnen.

Ausgehend von diesem Stand der Technik ist es die Aufgabe der hier beschriebenen Erfindung, ein Verfahren zur Aufbereitung von Akkumulatoren bereitzustellen, mit dem eine schnelle, ressourcenschonende, kostengünstige und nachhaltige Wiederaufbereitung eines Akkumulators ermöglicht wird.

Diese Aufgabe wird durch ein Verfahren gemäß dem Anspruch 1 gelöst. Vorteilhafte Ausgestaltungen des erfindungsgemäßen Verfahrens können den abhängigen Ansprüchen entnommen werden.

Erfindungsgemäß handelt es sich um ein Verfahren zur Aufbereitung von Ackumulatoren, welches sich dadurch auszeichnet, dass ein Akkumulator entladen wird, der entladene Akkumulator geöffnet wird, der geöffnete Akkumulator in seine Einzelzellen zerlegt wird und anschließend die Einzelzellen auf deren Zustand hin geprüft werden. Wiederverwertbare Einzelzellen können anschließend wieder zu einem neuen Akkumulator zusammengestellt werden oder zum Austausch von nicht mehr funktionstüchtigen bzw. beschädigten Einzelzellen bei Akkumulatoren dienen.

Vor dem Entladen ist in einer ersten vorteilhaften Ausgestaltung eine vorausgehende Sichtprüfung denkbar, bei der zunächst der äußerliche Zustand des Ackumulators geprüft wird, um festzustelle, ob bereits äußerlich etwaige Beschädigungen erkennbar sind. Dies kann insbesondere durch ein entsprechendes Kamerasystem oder durch eine Aufsichtsperson erfolgen.

Ferner sieht die Erfindung für das Verfahren in einer vorteilhaften Ausgestaltung vor, dass bei der Prüfung des Zustandes der Einzelzellen abhängig von der Restkapazität und/oder des State of Health (SOH) der Einzelzellen die Einzelzellen in wiederverwertbare und nicht wiederverwertbare Einzelzellen sortiert.

Die Restkapazität gibt an, wieviel Ampere der Akkumulator in einer Stunde liefern kann, d.h. wieviel Energie von dem Akkumulator über die Zeit zur Verfügung gestellt werden kann. Der State of Health (SOH) stellt den Kennwert über den Alterungszustand eines Akkumulators dar, im Vergleich zu dessen Nenn- bzw. Neuwerts. Mit anderen Worten: Der SOH gibt an, wieviel Kapazität der Akkumulator gegenüber seiner Ursprungskapazität noch zur Verfügung hat.

Besonders bevorzugt findet die Sortierung der Einzelzellen anhand eines festgelegten Schwellenwertes der Restkapazität und/oder der SOH statt, wobei besonders bevorzugt der Schwellenwert der SOH bei über 50 % liegt.

Der zuletzt genannte Wert wird deshalb gewählt, da mit einer SOH unter 50 % eine Wiederverwertung, aufgrund der begrenzten Restlebensdauer und Kapazität nicht sinnvoll ist. Vielmehr werden Einzelzellen des Akkumulators die unter die festgelegten Schwellenwerte fallen ausgesondert und über separaten Weg recycelt, d.h. in ihre Bestandteile zerlegt.

Um eine möglichst schnelle Aufbereitung des Akkumulators bei gleichzeitiger Automatisierung des Prozessschritts der Öffnung gewährleisten zu können, sieht die Erfindung in einer vorteilhaften Ausgestaltung für das Verfahren vor, dass die Öffnung des Akkumulators durch ein flexibles robotergestütztes Öffnungssystem erfolgt. Hierbei ist der Einsatz von aus dem Stand der Technik bekannte Roboterarme denkbar. Besonders bevorzugt werden mit dem flexiblen robotergestütztem Öffnungssystem die Zellebenen des geöffneten Akkumulators aus diesem extrahiert. Dies deshalb, da nicht jeder Akkumulator nur eine Zellebene aufweist, sondern durchaus mehrere, die jedoch jeweils für sich in den weiteren Schritten verarbeitet werden müssen.

Nach Entladung und Öffnung des Akkumulators wird der Akkumulator in seine Einzelzellen zerlegt. Dies erfolgt gemäß einer vorteilhaften Ausgestaltung des erfindungsgemäßen Verfahrens mittels eines Lasers. Der Vorteil des Einsatzes eines Lasers zum Zerlegen des Akkumulators liegt darin, dass ein Laser über eine hohe Präzision, Energiedichte sowie Arbeitsgeschwindigkeit verfügt, was sich positiv auf die Prozessökonomie auswirkt. Ferner ermöglicht der Einsatz eines Lasers eine Prozessautomatisierung. Meist sind die im Akkumulator angeordneten Einzelzellen durch eine die Einzelzellen verbindende Einrichtung, meist ein Busbar, miteinander verbunden. Daher sieht das erfindungsgemäße Verfahren in einer weiteren vorteilhaften Ausgestaltung vor, dass diese Einrichtung durch den Laser von den Einzelzellen gelöst wird.
In einer ersten alternativen Ausgestaltung erfolgt das Lösen der die Einzelzellen verbindende Einrichtung durch Abtragung der Schweißpunkte mittels eines Lasers. Dabei wird ein Laserstrahl auf die Schweißpunkte, die die Einrichtung, insbesondere einen Busbar, mit den Einzelzellen verbindet, ausgerichtet, und diese durch Einwirkung des Laserstrahls abgetragen. Das Abtragen der Schweißpunkte erfolgt dabei bevorzugt mittels eines kontinuierlichen Wellenlänge-Lasers, insbesondere eines Faserlasers, dessen Wellenlänge bevorzugt im IR-Bereich liegt, besonders bevorzugt eine Wellenlänge λ von 1070 nm aufweist.

Um möglichst exakt und ohne unnötigen weiteren Materialabtrag die Schweißpunkte abtragen zu können, sieht die Erfindung für das Verfahren in einer weiteren vorteilhaften Ausgestaltung vor, dass der Laserstrahl des Lasers einen Durchmesser von 30 µm bis 110 µm, bevorzugt von 80 µm, aufweist. Ferner wird in einer weiteren vorteilhaften Ausgestaltung ein Laserstrahl mit einer Energiedichte von > 3×10⁷ W/cm² verwendet. Bevorzugt wird die Laserleistung dabei frequenzmoduliert.

In einer zweiten alternativen Ausführungsform sieht die Erfindung für das Verfahren vor, dass das Lösen der die Einzelzellen verbindenden Einrichtung von den Einzelzellen durch thermisches Schneiden an den Schweißpunkten mittels des Lasers erfolgt. Dies hat den Vorteil, dass beim thermischen Schneiden nur eine kleine Oberfläche behandelt wird, nämlich lediglich der Umfang der Schweißpunkte.

Auch hier wird bevorzugt ein kontinuierlicher Wellenlänge-Laser verwendet, welcher ebenfalls bevorzugt seine Wellenlänge im IR-Bereich hat, besonders bevorzugt aber eine Wellenlänge von λ von 1070 nm aufweist, da diese sich optimal für das thermische Schneiden um die Schweißpunkte herum eignet.

Um auch beim thermischen Schneiden möglichst exakt und ohne unnötigen weiteren Materialabtrag um die Schweißpunkte herum schneiden zu können, sieht die Erfindung für das Verfahren in einer weiteren vorteilhaften Ausgestaltung vor, dass der Laserstrahl des Lasers einen Durchmesser von 30 µm bis 110 µm, bevorzugt von 80 µm, aufweist. Ferner wird in einer weiteren vorteilhaften Ausgestaltung ein Laserstrahl mit einer Energiedichte von > 1×10⁷ W/cm² verwendet.

In einer weiteren alternativen Ausgestaltung wird zum thermischen Schneiden an den Schweißpunkten ein gepulster Nanosekunden-Laser verwendet, welcher bevorzugt eine Wellenlänge von λ von 1064 nm aufweist. Der Entschwei-ßungsprozess kann auch mit frequenzverdoppelten oder zweifach harmonisierten Laserstrahlen erfolgen, die von IR-Lasern mit 1070 nm, 1064 nm bis in den sichtbaren Bereich erzeugt werden.

Um etwaige Überreste der Schweißpunkte von der Oberfläche der Einzelzellen entfernen zu können bzw. die Oberfläche nach dem Abtragen bzw. Schneiden zu glätten, sieht die Erfindung für das Verfahren in einer weiteren vorteilhaften Ausgestaltung vor, dass nach Lösen der die Einzelzellen verbindenden Einrichtung von den Einzelzellen die Oberfläche der Einzelzellen mittels eines Lasers bearbeitet werden. Dabei kann es sich um denselben Laser handeln, der zuvor zum Abtragen bzw. Schneiden verwendet wurde. Bevorzugt wird dabei ein Laserstrahl mit einer Energiedichte von 1×10⁵ bis 1×10⁷ W/cm², bevorzugt eine Energiedichte von 9,9×10⁶ W/cm², verwendet.

Damit der Laserstrahl der Laser sowohl beim Schneiden bzw. Abtragen als auch bei der nachträglichen Oberflächenbearbeitung, präzise aufgeführt werden kann, sieht die Erfindung für das Verfahren in einer weiteren vorteilhaften Ausgestaltung vor, dass der Laser mittels eines Laserscanners ausgerichtet wird.

Weiter sieht die Erfindung für das Verfahren in einer weiteren vorteilhaften Ausgestaltung vor, dass nach Lösen der die Einzelzellen verbindenden Einrichtung die Oberfläche kontrolliert wird, bevorzugt durch eine optische Einrichtung, insbesondere mittels einem Kamerasystem bzw. einer Kamera.

Nachfolgend wird die Erfindung anhand eines Ausführungsbeispiel näher erläutert.

Es zeigt:
- Fig. 1:: einen schematischen Ablauf des erfindungsgemäßen Verfahrens,
- Fig. 2a:: den Minuspol einer Einzelzelle in einer perspektivischen Ansicht,
- Fig. 2b:: den Pluspol einer Einzelzelle in einer perspektivischen Ansicht, sowie
- Fig. 3:: eine skizzenhafte Darstellung des Prozessschritts der Zerlegung des Akkumulators in seine Einzelzellen mittels eines Lasers.

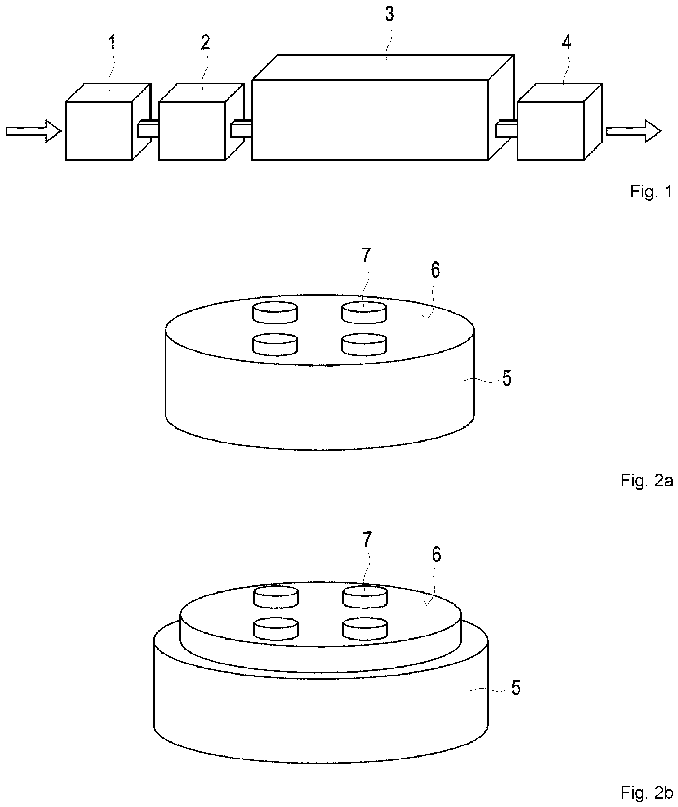

Figur 1 zeigt den Ablauf des erfindungsgemäßen Verfahrens in einem skizzenhaften Schema. Die Ablaufrichtung des Verfahrens ist durch die links und rechts an den einzelnen Stationen bzw. Prozessschritten vorhandenen Pfeile dargestellt. Zunächst wird der aufzubereitende Akkumulator in der Entladung 1 entladen. Der Entladung 1 vorgeschaltet kann dabei eine Sichtprüfung sein, um bereits mögliche äußerlich sichtbare Beschädigungen zu detektieren und zu dokumentieren. Nach dem der Akkumulator in der Entladung 1 vollständig entladen wurde bzw. so weit, dass eine gefahrenlose Weiterverarbeitung ermöglicht ist, wird der Akkumulator geöffnet 2. In der Öffnung 2 werden Zellebenen bzw. die Einzelzellen des Akkumulators freigelegt bzw. extrahiert. Dies kann hierbei beispielsweise durch einen Roboterarm automatisiert ablaufen. Nach Passierung des Prozessschrittes Öffnung 2 gelangt der nunmehr entladene und geöffnete Akkumulator in den Prozessschritt Zerlegung 3. Innerhalb der Zerlegung 3 wird der Akkumulator in seine Einzelzellen zerlegt. Dies geschieht hierbei durch Verwendung eines Lasers, welcher durch thermisches Schneiden den Busbar, also die Einrichtung zur Verbindung der Einzelzellen 5, von den Einzelzellen 5 löst, sodass der Busbar vom Akkumulator entfernt werden kann. Nach Entfernung der Verbindungseinrichtung, also dem Busbar, werden die Einzelzellen 5 auf deren Zustand hin geprüft, wobei die Einzelzellen 5 in wiederverwertbare und nicht wiederverwertbare Einzelzellen 5 unterteilt werden. Die wiederverwertbaren Einzelzellen 5 können dabei sowohl zur Erstellung eines neuen Ackumulators als auch zum Austausch einzelner beschädigter oder nicht mehr funktionstüchtiger Einzelzellen bei anderen Akkumulatoren dienen.

Fig. 2a und 2b zeigen sowohl den Minus- als auch Pluspol einer solchen von der Verbindungseinrichtung, also dem Busbar, befreiten Einzelzelle 5. Durch das thermische Schneiden mittels eines Lasers, bleiben die Schweißpunkte 7, die die Einzelzelle 5 mit der Verbindungseinrichtung, also dem Busbar, verbunden haben, auf der Oberfläche 6 des Plus- und Minuspols übrig. Diese Schweißpunkte 7 bzw. Rückstände können in einem nachgelagerten Prozessschritt noch durch eine weitere Behandlung mit einem Laser von der Oberfläche 6 der Pole entfernt werden.

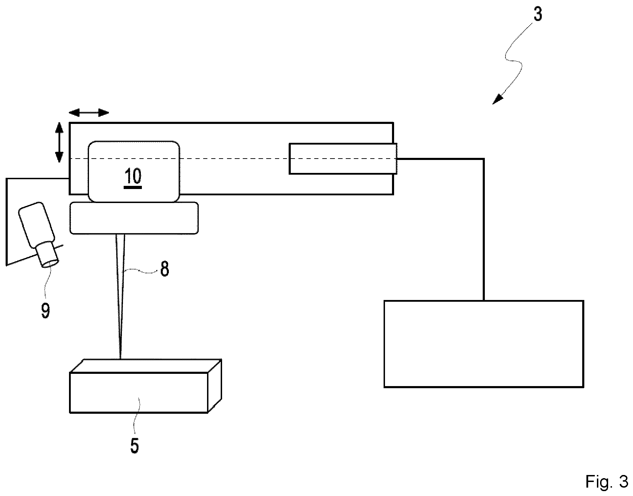

Ferner zeigt Figur 3 den Prozessschritt der Zerlegung 3, insbesondere das Entfernen der die Einzelzellen 5 verbindenden Einrichtung, also dem Busbar, von den Einzelzellen 5 mittels eines Lasers 8. In dem hier in Figur 3 dargestellten Ausführungsbeispiel handelt es sich um einen kontinuierlichen IR-Laser 8 mit einer Wellenlänge von 1070 nm oder 1064 nm. Der Laserstrahl des Lasers 8 wird mittels eines Laserscanners 10 auf die Schweißpunkte 7 der Verbindungseinrichtung ausgerichtet, wobei die Schweißpunkte 7 mit einem am Laser 8 angeordneten Kamerasystem 9 detektiert werden. Nach der Detektion der Schweißpunkte 7 mittels dem Kamerasystem 9 richtet der Laserscanner 10 den Laserstrahl des IR-Lasers 8 auf die Schweißpunkte 7 aus und entfernt diese durch Abtragen oder thermisches Schneiden.
Anschließend kann die so von den Einzelzellen 5 gelöste Verbindungseinrichtung in einem hier nicht weiter dargestellten nachgelagerten Prozessschritt von dem Akkumulator entfernt und die Einzelzellen 5 extrahiert bzw. der weiteren Verwertung zugeführt werden.

Somit ist vorstehend ein Verfahren zu Aufbereitung von Akkumulatoren offenbart, welches eine schnelle, ressourcenschonende, kostengünstige und nachhaltige Wiederaufbereitung eines Akkumulators ermöglicht.

### BEZUGSZEICHENLISTE

- 1: Entladung
- 2: Öffnung
- 3: Zerlegung
- 4: Prüfung
- 5: Einzelzelle
- 6: Oberfläche
- 7: Schweißpunkte
- 8: Laser
- 9: Kamerasystem
- 10: Laserscanner

## Patentansprüche

1. Verfahren zur Aufbereitung von Akkumulatoren, wobei
- der Akkumulator entladen wird (1),
- der entladene Akkumulator geöffnet wird (2),
- der geöffnete Akkumulator in seine Einzelzellen zerlegt wird (3), und
- die Einzelzellen auf deren Zustand hin geprüft werden (4)
**dadurch gekennzeichnet, dass** die Öffnung (2) des Akkumulators durch ein flexibles robotergestütztes Öffnungssystem erfolgt und zur Zerlegung (3) des Akkumulators in die Einzelzellen (5) ein Laser (8) verwendet wird.

2. Verfahren nach Anspruch 1, **dadurch gekennzeichnet, dass** bei der Prüfung (4) des Zustandes der Einzelzellen (5) abhängig von der Restkapazität und/oder des State of Healts (SOH) der Einzelzellen (5) die Einzelzellen (5) in wiederverwertbare und nicht wiederverwertbare Einzelzellen (5) sortiert werden.

3. Verfahren nach Anspruch 2, **dadurch gekennzeichnet, dass** die Sortierung der Einzelzellen (5) anhand eines festgelegten Schwellenwerts der Restkapazität und/oder der SOH erfolgt, wobei bevorzugt der Schwellenwert der SOH bei über 50 % liegt.

4. Verfahren nach Anspruch 3, **dadurch gekennzeichnet, dass** die Zellebenen des geöffneten Akkumulators aus dem Akkumulator extrahiert werden.

5. Verfahren nach einem der vorhergehenden Ansprüche, **dadurch gekennzeichnet, dass** mittels des Lasers (8) eine die Einzelzellen (5) verbindende Einrichtung, insbesondere ein Busbar, von den Einzelzellen (5) gelöst wird.

6. Verfahren nach Anspruch 5, **dadurch gekennzeichnet, dass** das Lösen der die Einzelzellen (5) verbindenden Einrichtung von den Einzelzellen (5) durch Abtragung der Schweißpunkte (7) mittels des Lasers (8) erfolgt.

7. Verfahren nach Anspruch 6, **dadurch gekennzeichnet, dass** die vom Laser (8) abzutragenden Schweißpunkte (7) mittels einer optischen Einrichtung, insbesondere einem Kamerasystem (9), detektiert werden.

8. Verfahren nach Anspruch 5, **dadurch gekennzeichnet, dass** das Lösen der die Einzelzellen (5) verbindenden Einrichtung von den Einzelzellen (5) durch thermisches Schneiden an den Schweißpunkten (7) mittels des Lasers (8) erfolgt.

9. Verfahren nach Anspruch 8, **dadurch gekennzeichnet, dass** ein kontinuierlicher Wellenlängen-Laser verwendet wird, bevorzugt im IR-Bereich, besonders bevorzugt mit einer Wellenlänge λ von 1070 nm.

10. Verfahren nach Anspruch 8, **dadurch gekennzeichnet, dass** ein gepulster Nanosekunden-Laser verwendet wird, bevorzugt mit einer Wellenlänge λ von 1064 nm.

11. Verfahren nach wenigstens einem der Ansprüche 5 bis 10, **dadurch gekennzeichnet, dass** nach Lösen der die Einzelzellen (5) verbindenden Einrichtung von den Einzelzellen (5) die Oberfläche (6) der Einzelzellen (5) mittels eines Lasers (8) bearbeitet wird.

12. Verfahren nach wenigstens einem der Ansprüche 4 bis 11, **dadurch gekennzeichnet, dass** der Laser (8) mittels einer optischen Einrichtung, insbesondere mittels eines Laserscanners (10), ausgerichtet wird.

13. Verfahren nach wenigstens einem der Ansprüche 3 bis 12, **dadurch gekennzeichnet, dass** die Oberfläche (6) der Einzelzellen (5) kontrolliert wird, bevorzugt durch eine optische Einrichtung, insbesondere einem Kamerasystem (9).
